# EUROPEAN PATENT APPLICATION

(11) **EP 3 238 564 A1**
(43) Date of publication of application: **01.11.2017**
(21) Application number: 15873456.6
(22) Date of filing: 15.10.2015
(51) Int. Cl.: A45D 34/04, B65D 47/00

(54) **PUMPING TYPE OF COSMETICS CONTAINER EQUIPPED WITH SIDE BUTTON**

(30) Priority: 26.12.2014 KR 20140189695
(71) Applicant: YONWOO CO.,LTD, 13 Gajwa-ro 84beon-gil Seo-gu Incheon 22824 (KR)
(72) Inventor: KIM, Hak-Chan, Incheon 22824 (KR); JUNG, Seo-Hui, Incheon 22824 (KR)
(74) Representative: Nordic Patent Service A/S
(86) International application number: PCT/KR2015/010899
(87) International publication number: WO 2016/104928

(57) **Abstract**

The present invention disclosed herein relates to a pumping type of cosmetics container equipped with a side button, wherein the container is configured such that a pumping action occurs and contents are discharged when the user pressurizes a button part and the button part elastically deforms due to own elastic force of the button part, thereby making it possible to easily discharge the contents by means of a simple structure even without the presence of a separate pumping member, and thus making it possible to not only shorten the assembly time but also to reduce manufacturing costs.

## Description

### BACKGROUND OF THE INVENTION

The present invention disclosed herein relates to a pumping type of cosmetics container equipped with a side button, wherein the container is configured such that a pumping action occurs and contents are discharged when the user pressurizes a button part and the button part elastically deforms due to own elastic force of the button part, thereby making it possible to easily discharge the contents by means of a simple structure even without the presence of a separate pumping member, and thus making it possible to not only shorten the assembly time but also to reduce manufacturing costs.

Generally, a pumping type of cosmetics containers are configured to discharge contents to the outside by a pumping action of a pumping member, comprising: a container body where contents are received, a pumping member coupled to an upper portion of the container body and moving the contents received in the container body by the pumping action to an upper portion thereof, and a button part, coupled to an upper portion of the pumping member and delivering pressure to the pumping member by user's pressurization, further including a contents discharge hole at one side thereof for discharging the contents.

The pumping type of cosmetics container as in the above is configured to have a pressure change inside a cylinder composed of a pumping member by the pressure when a user pressurizes a button part, and to discharge the contents stored inside the container body in a predetermined amount through a contents discharge hole by the pressure change. Conventional cosmetic containers are configured to have a pumping member and a button part disposed directly above the container body and to discharge the contents by ascent/descent of the button part; therefore, the position of the contents discharge hole provided at one side of the button part is changed upwards and downwards, such that it is hard for a user to directly apply contents onto an intended skin region, and thereby the user should apply the contents onto the skin after firstly discharging the contents on user's hand.

To solve the above problems, recently there are being developed pumping type cosmetics containers equipped with a side button, which has an applicator provided at an upper portion thereof and a button part provided at a side surface thereof such that contents can be discharged through the applicator when the button part at the side surface is manipulated.

The pumping type of cosmetics container equipped with a side button as in the above is disclosed in the registered patent 10-1464191 (hereafter, called the registered patent).

The registered patent includes: a container body wherein contents are held; a cylinder part, placed at an upper portion of the container body and forming a passage where contents move, further comprising a cylinder body which is placed toward a side surface for being crossed at a right angle to the container body, a contents inflow tube which extends to a lower portion of the cylinder body, forming a contents inflow hole which leads the contents contained in the container body to flow into an interior of the cylinder body, and a content outflow tube which extends to an upper portion of the cylinder body, further forming a contents outflow hole wherein the contents flowing to an interior of the cylinder body can flow out; a pumping member which is inserted to an interior of the cylinder body and discharges contents by changing inner pressure of the cylinder body by a pumping movement; a button part which is combined to the pumping member and delivers pressure to the pumping member by a pressing movement; and an applicator which forms a contents discharging hole so that a user can discharge contents through the contents outflowing hole and thereby apply contents discharged outward onto a skin,

wherein the pumping member is composed of: a piston rod which moves inside the cylinder body; a seal cap which is coupled encircling an outer circumferential surface of the piston rod and moves in a state of being contacted to an inner wall of the cylinder body; a stem is fixedly installed at inner side of the button part and coupled to the piston rod, thereby delivering the pressure generated by pressing the button part to the piston rod; and a spring which is installed encircling an outer circumferential surface of the stem from the outside of the cylinder body, contracted when pressing the button part and relieved when releasing the button part, and restoring the button part by providing an elastic force to the stem,

wherein the piston rod is characterized in that for preventing interference in a process of contents moving to a contents outflowing hole by a pumping operation of the pumping member, an end of the piston rod which moves inside the cylinder body has a stroke distance with a range of not covering the whole of the contents inflow hole and the contents outflowing hole.

However, the registered patent constituted as the above, installed with a pumping member which performs a pumping action for discharging the contents stored in the container body, is configured in that a pumping action performs in a complicated structure of the pumping member which is composed of a piston rod, a seal cap, a stem, and a spring. Therefore, assembly time for equipping such a complicated pumping member increases and also manufacturing cost of the container increases, which eventually leads to user's cost burden.

### SUMMARY OF THE INVENTION

The present invention provides a pumping type of cosmetics container equipped with a side button, wherein the container is configured such that a pumping action occurs and contents are discharged when the user presses a button part and the button part elastically deforms due to the elastic force of the button part itself, thereby making it possible to easily discharge the contents by means of a simple structure even without a separate pumping member, and thus making it possible to not only shorten as assembly time but also to reduce manufacturing costs.

To solve the problems in the above, a pumping type of cosmetics container equipped with a side button according to the present invention is characterized to include: a container body storing contents and provided with a discharge hole; a valve housing coupled as encasing the discharge hole, and provided with a content inflow hole for contents stored in the container body to flow in, and further, installed with a first check valve for opening/closing the contents inflow hole; a cylinder part coupled to the valve housing and forming a passage where contents move, further including a cylinder body disposed towards a side surface for being crossed in a right angle, a contents inflow tube extending to a lower portion of the cylinder body and making contents stored in the container body flow to the inside of the cylinder body, and a contents outflow tube extending to an upper portion of the cylinder body and making contents flowing to the inside of the cylinder body flow out; a button part provided with a button body coupled to the inside of the cylinder body, a pressurization part made of elastic material, whose shape is deformed, and a contents outflow hole connected with the contents outflow tube at a side surface of the button body such that the contents flowing into the cylinder body can flow out by manipulation of the button body; a piston part coupled to an inner side of the button part and moving in a state of being closely contacted to an inner circumferential surface of the button body according to pressurization of the pressurization part; an applicator provided with a contents discharge hole such that the contents flowing out through the contents outflow hole can be discharged and applied onto user's skin; and a support body supporting the applicator and forming an insertion hole such that the button part can be inserted and exposed to the outside.

Furthermore, it is characterized in that the piston part includes: a piston body provided with a contents movement hole such that the contents flowing into the inside of the cylinder body through the contents inflow tube can move to the contents outflow tube, and a second check valve opening/closing the contents movement hole; and an extension part extending as encasing a side surface of the piston body and closely contacted to an inner circumferential surface of the button body.

Furthermore, it is characterized in that the extension part, which opens/closes the contents outflow hole according to pressurization of the pressurization part, is configured to be normally disposed in a state of closing the contents outflow hole and then to open the contents outflow hole by pressurization of the pressurization part according to movement of the piston body.

Furthermore, it is characterized in that at an inner side of the pressurization part is provided a fixing protrusion which is coupled to the piston body and fixes the piston part, and at the fixing protrusion is provided a contents movement groove such that the contents flowing into the piston body can flow out through the contents outflow hole.

Furthermore, it is characterized in that a connection hole is provided at a lower end of the cylinder body such that the contents flowing in through the contents inflow tube can move to the cylinder body.

As described in the above, the present invention is configured in that, when a user pressurizes a button part, the button part is deformed by own elastic force of the button part, thereby causing a pumping action and making contents discharged. Therefore, in the present invention it is possible to easily discharge contents by means of a simple structure, and thereby to shorten the assembly time and to reduce the manufacturing costs.

Furthermore, normally the extension part of the piston part closes the contents outflow hole and then the piston part is moved by elastic deformation of the button part when a user pressurizes the button part, thereby causing the extension part to open the contents outflow hole and enabling contents to be discharged. Due to such a structure, it is possible to prevent contents from being leaked when not in use.

### BRIEF DESCRIPTION OF THE DRAWINGS

FIG. 1 is an exploded perspective view illustrating a configuration of a pumping type of cosmetics container equipped with a side button according to an exemplary embodiment of the present invention.
FIG. 2 is an assembled perspective view illustrating a configuration of a pumping type of cosmetics container equipped with a side button according to an exemplary embodiment of the present invention.
FIG. 3 is an assembled cross-sectional view illustrating a configuration of a pumping type of cosmetics container equipped with a side button according to an exemplary embodiment of the present invention.
FIG. 4 is an explanatory view illustrating a configuration of a contents movement groove in a state of a fixing protrusion and a piston body being coupled according to an exemplary embodiment of the present invention.
FIG. 5 is an operational state of a pumping type of cosmetics container equipped with a side button according to an exemplary embodiment of the present invention.

### DETAILED DESCRIPTION OF PREFERRED EMBODIMENTS

Hereinafter, exemplary embodiments of the present invention will be described in detail with reference to the accompanying drawings. The same reference numerals provided in the drawings indicate the same members.

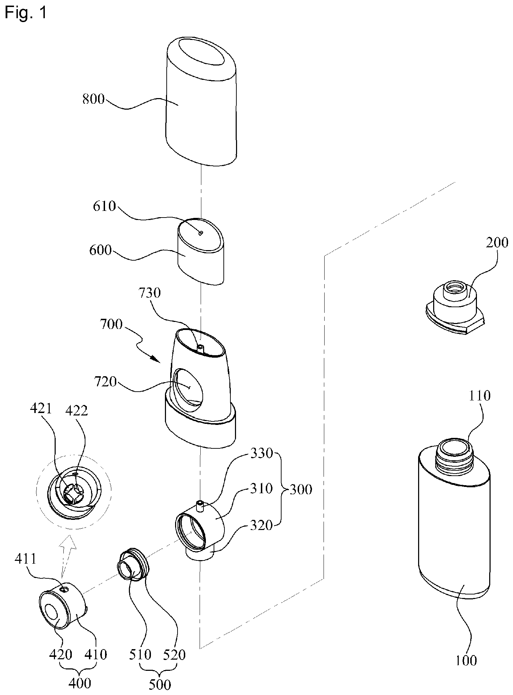

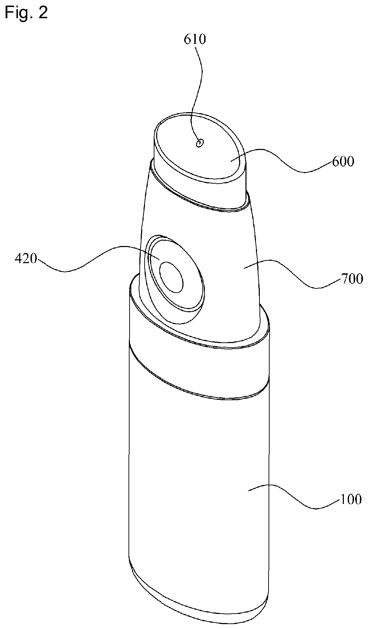

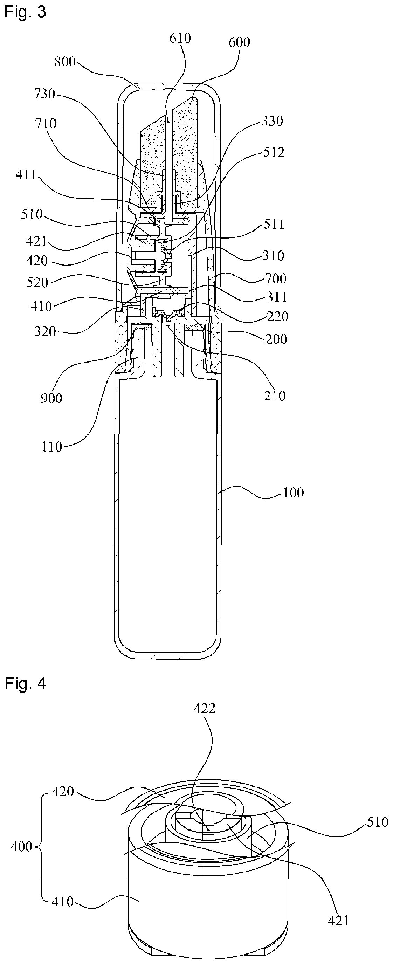

FIG. 1 is an exploded perspective view illustrating a configuration of a pumping type of cosmetics container equipped with a side button according to an exemplary embodiment of the present invention. FIG. 2 is an assembled perspective view illustrating a configuration of a pumping type of cosmetics container equipped with a side button according to an exemplary embodiment of the present invention. FIG. 3 is an assembled cross-sectional view illustrating a configuration of a pumping type of cosmetics container equipped with a side button according to an exemplary embodiment of the present invention.

Referring to FIGS. 1 to 3, a pumping type of cosmetics container equipped with a side button according to an exemplary embodiment of the present invention includes a container body 100, a valve housing 200, a cylinder part 300, a button part 400, a piston part 500, an applicator 600, and a support body 700.

The container body 100, where contents are stored, is provided with a discharge part 110, at an upper portion thereof, where contents are discharged. A sealing member 900 is preferred to be equipped at an upper end of the discharge part 110 as being closely contacted to a lower end of the valve housing 200, such that the sealing member 900 can prevent contents from being leaked through a space between the discharge part 110 and the valve housing 200.

At an inner side of the container body 100 is provided a piston which ascends according to use of contents.

The valve housing 200, coupled as encasing the discharge part 110 and closing the discharge part 110, is formed with a contents inflow hole 210 where contents flow such that the contents stored in the container body 100 can move to the inside of the cylinder part during pumping action by manipulation of the button part 400. It is preferred that at the valve housing 200 is provided a first check valve 220 which opens/closes the contents inflow hole 210 by pumping action through manipulation of the button part 400.

The cylinder part 300, coupled to the valve housing 200 and forming a passage where contents move, includes a cylinder body 310, a contents inflow tube 320 and a contents outflow tube 330.

The cylinder body 310, forming a space where a piston part 500 operates is characterized to be disposed towards a side surface for being crossed in a right angle in the present invention.

Since the cylinder body 310 is disposed towards a side surface for being crossed in a right angle, it is possible for the button part 400 to be installed at a side surface, not at directly the above, of the container body 100. Due to this, the cylinder body 310 has a structure wherein a pumping action occurs and thereby contents are discharged through an applicator 600 when the button part 400 installed at the side surface is pressurized, such that it is possible to apply contents exactly on a region where a user intends to apply through an applicator 600.

Meanwhile, at a lower end of the cylinder body 310 is installed a connection hole 311 such that the contents flowing in through a contents inflow tube 320 can move to the cylinder body 310.

The contents inflow tube 320, extending to a lower portion of the cylinder body 310 and closing an upper portion of the container body 100, enables the contents moving through the contents inflow hole 210 to flow into the inside the cylinder body 310 when a first check valve 220 opens the contents inflow hole 210 by pumping action according to manipulation of the button part 400.

The contents outflow tube 330, extending to an upper portion of the cylinder body 310 and making the contents flowing into the cylinder body 310 move to the outside, is configured to be connected to a discharge outlet 730 such that that contents flowing to the inside of the cylinder body 310 can move to an applicator 600.

The button part 400, coupled to the cylinder part 300 and installed towards a side surface for being crossed to the container body 100 in a right angle, is configured to be elastically deformed according to user's pressurization and discharges the contents flowing into the cylinder part 300 to the outside. In the present invention, the button part 400 is characterized to comprise a button body 410 coupled to the interior of the cylinder body 310 and a pressurization part 420 which is made of elastic material and therefore, a shape thereof changes according to user's pressurization.

The button body 410 has a part of a lower end thereof cut open such that contents can move to the inside of the cylinder body 310 through the connection hole 311, and has a contents outflow hole 411 connected to the contents outflow tube 330 at a side surface thereof such that the contents flowing to the cylinder body 310 by manipulation of the contents outflow tube 330 can flow out through the contents outflow tube 330.

Meanwhile, the pressurization part 420, the whole of which moves forward when a user pressurizes the pressurization part 420 and restores when the user releases pressurization, changes the inner pressure of the cylinder part 300 and discharges the contents flowing into the cylinder part 300 to the outside. The pressurization part 420 is made of elastic material for being elastically deformed by user's pressurization.

Furthermore, a fixing protrusion which is coupled to a piston body 510 and fixes a piston part 500 is equipped at an inner side of the pressurization part 420, and a contents movement groove 422 is formed at the fixing protrusion 421 such that the contents flowing into the piston body 510 can flow out through the contents outflow hole 411.

The contents movement groove 420, longitudinally formed in multitude along the fixing protrusion 421, is configured to be connected with a space formed by the pressurization 420 and a end of cylinder body 310, such that contents can move.

The piston part 500, coupled to the fixing protrusion 421 at an inner side of the button part 400 and changing the inner pressure of the cylinder part 300 according to pressurization of the pressurization part 420 while moving in a state of being closely contacted to an inner circumferential surface of the button body 410, includes a piston body 510 and an extension part 520.

The piston body 510, coupled to the fixing protrusion 421 and moving along with the fixing protrusion 421 according to pressurization of the pressurization 420, is equipped with a contents movement hole 511 such that the contents flowing to the inside of the cylinder body 310 through the contents inflow tube 320 can move to the contents outflow tube 330 and further with a second check valve 512, at an inner side thereof, which opens/closes the contents movement hole 511 according to pressurization of the pressurization part 420.

The extension part 520, extending as encasing a side surface of the piston body 510 and closely contacted to an inner circumferential surface of the button body 410, changes the inner pressure of the cylinder part 300 in a process of moving while being closely contacted to an inner circumferential surface of the button body 410 and enables the contents flowing to the cylinder part 300 to flow out to the outside.

Meanwhile, it is characterized that the extension part 520 is configured to open/close the contents outflow hole 411 according to pressurization of the pressurization part 420. The extension part 520 is normally disposed in a state of closing the contents outflow hole 411, and moves along together as the piston body 510 moves when the pressurization part 420 is pressurized, thereby opening the contents outflow hole 411. Due to this, it is possible to prevent contents from being leaked through the contents outflow hole 411 during the normal time when not in use.

The applicator 600, secured at a securing part 710 of a support body 700 to be described later and discharging contents to the outside, is provided with a contents discharge hole 610 such that the contents moving through a discharge outlet 730 can be discharged to the outside and applied onto user's skin.

The applicator 600 can be composed of a roller, a brush, a sponge, and the like such that a user can apply contents effectively onto a user's skin depending its use.

The support body 700, coupled to an upper portion of the container body 100 and supporting the applicator 600, is formed with a securing part 710 where the applicator 600 is secured at an upper portion thereof and a insertion hole 720 at a side surface such that the button part 400 can be inserted and exposed to the outside.

At a central portion of the support body 700, a discharge outlet 730 connected to the contents outflow tube 330 such that the contents flowing out through the contents outflow tube 330 can be discharged to the applicator 600.

Meanwhile, at the support body 700, a over cap 800 which protects the applicator 600 and encases the applicator 600 for preventing foreign matters from entering through the contents discharge hole 610 is detachably coupled.

Hereafter, referring to FIGS. 4 to 5, an operational process of a pumping type of cosmetics container equipped with a side button according to an exemplary embodiment of the present invention will be described.

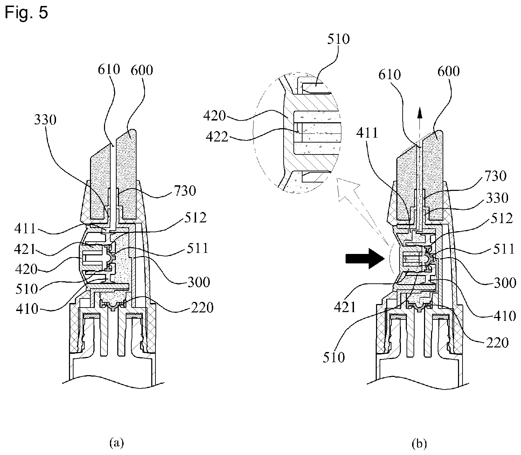

FIG. 4 is an explanatory view illustrating a configuration of a contents movement groove in a state of a fixing protrusion and a piston body being coupled according to an exemplary embodiment of the present invention. FIG. 5 is an operational state of a pumping type of cosmetics container equipped with a side button according to an exemplary embodiment of the present invention.

Referring to FIGS. 4 to 5, when a user pressurizes the pressurization part 420, the pressurization part 420 made of elastic material moves forward, and due to this, the piston body 510 coupled with the fixing protrusion 421 of the pressurization part 420 moves along together. When the piston body 510 moves, the extension part 520 extending to a side surface moves along together in a state of being closely contacted to an inner wall of the button body 410, and thus the pressure of the cylinder part 300 changes and performs the pumping action.

When the pumping action is performed as in the above, a second check valve 512 opens a contents movement hole 511 by the pressure of moving contents which flow into the cylinder part 300, and the contents moves to the inside of the piston body 510 through the contents movement hole 511. Then, the contents flowing to the inside of the piston body 510 go through the contents movement groove 422 and move to the contents outflow tube 330 through a space formed by the pressurization part 420 and an end of the cylinder body 310.

At this time, the contents outflow tube 330 opens as the connection part 520 is moved by pressurization of the pressurization part 420, and therefore, the contents flowing through the contents outflow tube 330 pass through the discharge outlet 730 and are discharged to the applicator 600 through the contents discharge hole 610.

Meanwhile, when the pressurization part 420 is released from being pressurized, the pressurization part 420 having moved forward by own elastic force restores. Due to this, as the piston body 510 coupled to the fixing protrusion 421 of the pressurization part 420 moves along together. Thus, as the extension part 520 which extends to a side surface of the piston body 510 moves in a state of being closely contacted to an inner wall of the button body 410, a suction force inside the cylinder part 300 is generated, such that the first check valve 220 is opened and the second check valve 512 is closed, and therefore, the contents stored in the container body 100 flow to the inside of the cylinder part 300 through the contents inflow hole 210.

At this moment, the contents outflow tube 330 is closed when the extension part 520 moves by the release of the pressurization 420. Due to this, it is possible to prevent the contents flowing into the cylinder part 300 from being leaked and at the same time, prevents air from flowing into the cylinder part 300.

As described above, optimal embodiments have been disclosed in the drawings and the specification. Although specific terms have been used herein, these are only intended to describe the present invention and are not intended to limit the meanings of the terms or to restrict the scope of the present invention as disclosed in the accompanying claims. Therefore, those skilled in the art will appreciate that various modifications and other equivalent embodiments are possible from the above embodiments. Therefore, the technical protective range of the present invention should be defined by the technical of idea of accompanied claims.

## Claims

1. A pumping type of cosmetics container equipped with a side button, comprising:
a container body (100) storing contents and provided with a discharge hole (110);
a valve housing (200) coupled as encasing the discharge hole (110), and provided with a content inflow hole (210) for contents stored in the container body (100) to flow in, and further, installed with a first check valve (220) for opening/closing the contents inflow hole (210);
a cylinder part (300) coupled to the valve housing (200) and forming a passage where contents move, further comprising a cylinder body (310) disposed towards a side surface for being crossed in a right angle, a contents inflow tube (320) extending to a lower portion of the cylinder body (310) and making contents stored in the container body (100) flow to the inside of the cylinder body (310), and a contents outflow tube (330) extending to an upper portion of the cylinder body (310) and making contents flowing to the inside of the cylinder body (310) flow out;
a button part (400) provided with a button body (410) coupled to the inside of the cylinder body (310), a pressurization part (420) made of elastic material and having a shape thereof deformed, and a contents outflow hole (411) connected with the contents outflow tube (330) at a side surface of the button body (410) such that contents flowing into the cylinder body (310) can flow out by manipulation of the button body (310);
a piston part (500) coupled to an inner side of the button part (400) and moving in a state of being closely contacted to an inner circumferential surface of the button body (400) according to pressurization of the pressurization part (420);
an applicator (600) provided with a contents discharge hole (610) such that the contents flowing out through the contents outflow hole (411) can be discharged and applied onto user's skin; and
a support body (700) supporting the applicator (600) and forming an insertion hole (720) such that the button part (400) can be inserted and exposed to the outside.

2. The pumping type of cosmetics container equipped with a side button of claim 1,
**characterized in that** the piston part (500) comprises: a piston body (510) provided with a contents movement hole (511) such that the contents flowing into the inside of the cylinder body (310) through the contents inflow tube (320) can move to the contents outflow tube (330), and a second check valve (512) opening/closing the contents movement hole (511); and an extension part (520) extending as encasing a side surface of the piston body (510) and closely contacted to an inner circumferential surface of the button body (410).

3. The pumping type of cosmetics container equipped with a side button of claim 2,
**characterized in that** the extension part (520), opening/closing the contents outflow hole (411) according to pressurization of the pressurization part (420), is configured to be normally disposed in a state of closing the contents outflow hole (411) and then to open the contents outflow hole (411) by pressurization of the pressurization part (420) according to movement of the piston body (510).

4. The pumping type of cosmetics container equipped with a side button of claim 1,
**characterized in that** at an inner side of the pressurization part (420) is provided a fixing protrusion (421) coupled to the piston body (510) and fixing the piston part (500), and at the fixing protrusion (421) is provided a contents movement groove (422) such that the contents flowing into the piston body (510) can flow out through the contents outflow hole (411).

5. The pumping type of cosmetics container equipped with a side button of claim 4,
**characterized in that** a connection hole (311) is provided at a lower end of the cylinder body (310) such that the contents flowing in through the contents inflow tube (320) can move to the cylinder body (310).
